(19) Europäisches Patentamt
European Patent Office
Office européen des brevets

(11) **EP 2 880 287 B1**

(12) **EUROPEAN PATENT SPECIFICATION**

(45) Date of publication and mention of the grant of the patent:
**21.02.2018 Bulletin 2018/08**

(21) Application number: **13740324.2**

(22) Date of filing: **19.06.2013**

(51) Int Cl.:
*F02D 19/02* *(2006.01)*     *F02D 19/10* *(2006.01)*
*F02D 41/00* *(2006.01)*     *F02M 21/02* *(2006.01)*

(86) International application number:
**PCT/FI2013/050674**

(87) International publication number:
**WO 2014/020231 (06.02.2014 Gazette 2014/06)**

(54) **METHOD OF AND A CONTROL SYSTEM FOR CONTROLLING THE OPERATION OF AN INTERNAL COMBUSTION PISTON ENGINE**

VERFAHREN UND STEUERSYSTEM ZUR STEUERUNG DES BETRIEBS EINER HUBKOLBENBRENNKRAFTMASCHINE

PROCÉDÉ ET SYSTÈME DE COMMANDE POUR COMMANDER LE FONCTIONNEMENT D'UN MOTEUR À PISTON À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2012 FI 20125822**

(43) Date of publication of application:
**10.06.2015 Bulletin 2015/24**

(73) Proprietor: **Wärtsilä Finland Oy**
**65380 Vaasa (FI)**

(72) Inventors:
  • **DAHLBERG, Tommy**
    **FI-65100 Vaasa (FI)**
  • **FORS, Patrik**
    **FI-65300 Vasa (FI)**
  • **ÖSTMAN, Fredrik**
    **FI-65100 Vaasa (FI)**

(74) Representative: **Genip Oy**
    **Heikinkatu 7**
    **48100 Kotka (FI)**

(56) References cited:
  **EP-A2- 0 142 490**     **EP-A2- 0 894 959**
  **DE-A1-102009 029 013**     **DE-A1-102010 045 593**
  **JP-A- 2008 002 271**     **US-A1- 2005 172 942**
  **US-A1- 2005 177 300**     **US-A1- 2012 109 499**

## Description

## Technical field

Invention relates method of controlling the operation of an internal combustion piston engine, in which method gaseous fuel is fed to the engine to be combusted therein and heat value of the fuel is measured intermittently using a first interval and in which heat value is utilized in controlling the operation of the engine.

## Background art

Reciprocating piston engine is a known power source for electricity production in stationary power plants as well as in various kinds of marine vessels. It is also known to operate such engine by making use of gaseous fuel which is denoted as a gas engine in the following. For power plants using gas as fuel, it is usually possible to feed the power plant with gas of various qualities, more specifically various heat values. Usually, in order to provide reliable operation of the engine the engine has certain requirements for the fuel quality, also in the terms of the heat value.

Safe and reliable use of a gas engine, particularly as a marine engine, sets special requirements for the fuel feed system, the most important of which is that unexpected shut down of the engine cannot be accepted under any circumstances. Because of this, a gas engine comprises a backup fuel feed system. Typically, the gaseous fuel used as main fuel in the gas engine is fed into the combustion chamber of the engine mixed with air. It is ignited by injecting a very small amount of ignition fuel, which is ignited due to the existing conditions and thereby also ignites the gaseous fuel. As the gas engine the engine is operating according to otto process. For case of a malfunction in the above-mentioned operation affecting the running of the engine, the engine can be provided with a backup fuel feed system based on using only liquid fuel. In this case a transfer from running on gas to running on liquid fuel is performed so that the engine is run according to the diesel process.

EP1586758 A2 discloses a method of operating a gas engine comprising a first fuel feed system, a second fuel feed system and a third fuel feed system, the use of which can be alternated for running the engine in various operation modes. In the first operation mode of the engine the engine is run by introducing gaseous fuel into the combustion air of the engine via the first fuel feed system, whereby the gaseous fuel is ignited by injecting an ignition fuel into the mixture of combustion air and gaseous fuel via the second fuel feed system. The engine can be run in the second operation mode, in which the engine is run by still introducing gaseous fuel into the combustion air of the engine and the gaseous fuel is ignited by injecting ignition fuel into the mixture of combustion air and gaseous fuel via the third fuel feed system. US2005/177300 A1 discloses another method of operating a gas engine.

It is an object of the invention to provide method of and a control system for controlling the operation of an internal combustion piston engine by means of which the operation of the engine is more reliable when using fuel of uneven quality.

## Disclosure of the Invention

Objects of the invention are substantially met by method of controlling the operation of an internal combustion piston engine, in which method gaseous fuel is fed to the engine to be combusted therein; heat value of the fuel $HV_m$ is measured intermittently; a value indicative to engine's load $L_e$ is determined more often than the heat value of the fuel $HV_m$ is measured; a value indicative to mass flow rate $q_m$ of the fuel fed to the engine is determined more often than the heat value of the fuel $HV_m$ is measured; a relative heat value $HV_r$ is determined using a formula

$$HV_r = L_e / q_m * \eta$$

wherein $\eta$ is estimated or determined engine efficiency; and a correction factor Q is determined, which correction factor Q is a function of at least the measured heat value of the fuel $HV_m$, and the relative heat value $HV_r$, i.e. $Q = f(HV_m, HV_r, ...,)$; control heat value $HV_e$ is determined, which control heat value is a function of at least the correction factor Q and the relative heat value $HV_r$, i.e $HV_e = f(Q,HV_r, ...)$; and at least one control parameter of the engine is determined making use of the control heat value $HV_e$.

According to an embodiment of the invention the correction factor Q is an offset difference $\Delta = HV_m - HV_r$; and the control heat value $HV_e = HV_r + \Delta$.

According to another embodiment of the invention the correction factor Q is a ratio $d = HV_m / HV_r$; and the control heat value $HV_e = d *HV_r$.

According to an embodiment of the invention fuel of several qualities is combined constituting the fuel fed to the engine.

According to an embodiment of the invention the second interval equals the third interval.

According to an embodiment of the invention the first interval differs from the second interval.

According to an embodiment of the invention the offset difference $\Delta$ is subjected to filtering process prior to step of determination of the value for control heat value.

According to an embodiment of the invention during start-up of the engine the at least one control parameter of the engine is determined making use of the measured heat value $HV_m$ alone.

According to another embodiment of the invention during start-up of the engine the at least one control parameter of the engine is determined making use of a predetermined constant value.

According to an embodiment of the invention the value indicative to mass flow rate $q_m$ of the fuel fed to the engine is determined based on position status of a fuel feed control valve of the engine an pressure difference over the fuel feed control valve.

Objects of the invention are substantially met by a control system for controlling the operation of an internal combustion piston engine, comprising a control module arranged to receive operational data of the engine and send control data to the engine; measurement system arranged to measure heat value of the fuel $HV_m$ to be fed to the engine and arranged to communicate with the control module; an engine load determining unit arranged to receive operational data from the engine for providing a value indicative to engine's load $L_e$ more often than the heat value of the fuel $HV_m$ is measured and arranged to communicate with the control module; fuel mass flow rate $q_m$ determination unit of the engine arranged to determine more often than the heat value of the fuel $HV_m$ is measured and communicate with the control module; a processing unit in connection with the control module arranged to produce at least one engine control parameter based on a control heat value $HV_e$, determined by calculation of

I) a relative heat value $HV_r$ using a formula

$$HV_r = L_e \, / \, q_m \, ^* \, \eta$$

wherein $\eta$ is estimated or determined engine efficiency information stored or made available to the processing unit;
II) a correction factor Q being a function of at least the measured heat value of the fuel $HV_m$ and the relative heat value $HV_r$ ;
III) and the value for control heat value $HV_e$ is a function of at least the correction factor Q and the relative heat value $HV_r$, arranged to take place in the processing unit.

By means of the invention it is possible to combine the benefits of the accuracy of a heat value measurement and the fast reaction of an estimated control heating value in order to get a variable which can be used to adjust the behavior of the control system of the engine to ensure optimal performance.

## Brief Description of Drawings

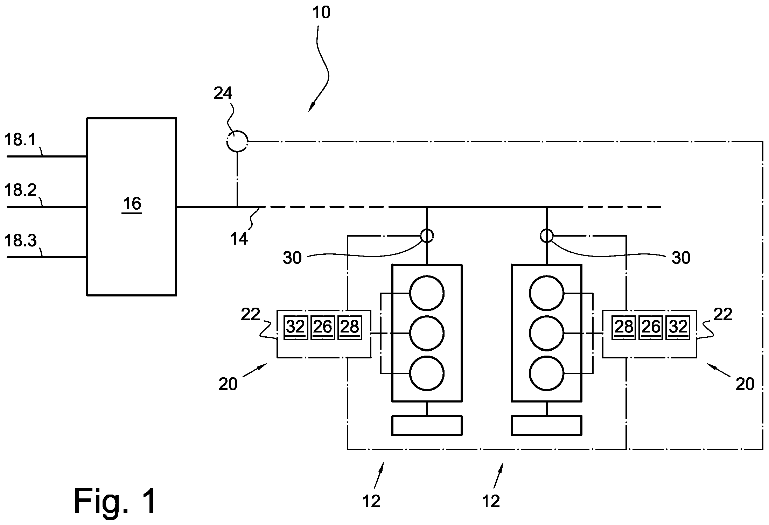

In the following, the invention will be described with reference to the accompanying exemplary, schematic drawing, in which Figure 1 illustrates a fuel feeding system for an internal combustion piston engine comprising a control system according to according to an embodiment of the invention.

## Detailed Description of Drawings

Figure 1 depicts schematically two internal combustion piston engines 12 which are arranged to produce electricity in a power plant. The engines 12 are gas operated piston engines and they are connected to a fuel feeding system 10. The fuel feeding system is common for all of the engines (two of which are shown here) of the power plant.

The fuel feeding system 10 comprises a feed line 14 which is connected to each of the engines 12. The fuel feed line comprises a mixing unit 16 into which more than one sources of gaseous fuel 18.1 ...18.3 are connected. There is a measurement system 24 in connection with the fuel feed line which is arranged to measure heat value of the fuel $HV_m$ to be fed to the engine or engines.

There is a control system 20 in connection with each of the internal combustion engine provided for controlling the operation the engine. The control system comprises a control module 22 arranged to receive operational data of the engine and send control data to the engine so that the engine is operated under control of the control module. The measurement system is arranged to communicate with the control module. Thus the heat value of the fuel is available for the control module to be utilized in the control procedure.

The control system 20 further comprises an engine load determining unit 26 arranged to receive operational data from the engine for providing a value indicative to load $L_e$ of the engine. The engine load determining unit 26 is arranged to communicate with the control module either as being an integral part of the module as depicted in figure 1 or as an external part.

During the operation of the internal combustion piston engine gaseus fuel is fed to each of the engines. There is further a fuel mass flow rate $q_m$ determination unit 28 of the engine arranged to communicate with the control module either as being an integral part of the module as depicted in figure 1 or as an external part. The mass flow rate $q_m$ determination unit 28 arranged to receive information a fuel feed control valve 30 of the engine. Advantageously the information comprises position status of valve and/or pressure difference over the valve based on which the mass flow rate may be determined.

The control module 22 further comprises a processing unit 32 arranged to produce at least one engine control parameter based on or making use of a control heat value $HV_e$. Controlling of the operation of the engine makes use of the heat value which is determined by calculation of a relative heat value $HV_r$ using a formula

$$HV_{r\,=}\, Le \, / \, q_m \, ^* \, \eta$$

where η is estimated or determined engine efficiency information stored or made available to the processing unit. Further in the method a correction factor Q is determined, which correction factor Q is a function of at least the measured heat value of the fuel $HV_m$ and the relative heat value $HV_r$. Next, a control heat value $HV_e$ is determined, which control heat value is a function of at least the correction factor Q and the relative heat value $HV_r$ defined previously; and at least one control parameter of the engine is determined making use of the control heat value $HV_e$.

According to an embodiment of the invention the correction factor Q is an offset difference determined using a formula

$$\Delta = HV_m - HV_r$$

And in this case, the value for the control heat value is determined using a formula

$$HV_e = HV_r + \Delta.$$

According to another embodiment of the invention the correction factor Q is a ratio

$$d = HV_m / HV_r$$

And in this case, the value for the control heat value is determined using a formula

$$HV_e = d * HV_r.$$

The engine control parameter comprises one or more of the following.

  i. ignition timing,
  ii. feed line gas pressure
  iii. engine pre-chamber gas pressure
  iv. position of a valve connecting the combustion air feed manifold and the exhaust gas manifold of the engine
  v. waste gate position
  vi. combustion air pressure in the combustion air feed manifold of engine

Position of any combination of control valves affecting the operating point of the turbocharger and the combustion air conditions of the engine may also be included in the list of above control parameters.

In the mixing unit 16 more than one source of gaseous fuel 18.1 ...18.3 is connected so that fuel of several qualities in the more than one source of gaseous fuel 18.1 ...18.3 is combined constituting the fuel fed to the engine.

The method of controlling the operation of an internal combustion piston engine comprises measuring the heat value of the fuel $HV_m$ intermittently using a first interval. The first interval is 10s - 10 min, whereas the value indicative to engine's load $L_e$ is determined using a second interval, the second interval being 10ms - 1s. Further the value indicative to mass flow rate $q_m$ of the fuel fed to the engine is preferably determined using a second interval.

According to an embodiment of the invention the offset difference Δ is subjected to filtering process prior to practicing the step of determining a next value for control heat value $HV_e = HV_r + \Delta$.

The filtering process comprises signal processing which enhances the actual signal and removes or suppresses unwanted components or features. The filtering process may comprise any filtering apparent to a skilled person, for example low pass filtering, Kalman or Recursice Least Square filtering or a combination thereof.

During the start-up of the engine the at least one control parameter of the engine is determined making use of the measured heat value $HV_m$ alone since there is no relevant data available in order to determine the control heat value.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such a combination is technically feasible.

**Claims**

1. Method of controlling the operation of an internal combustion piston engine, in which method

  a) gaseous fuel is fed to the engine to be combusted therein;
  b) heat value of the fuel $HV_m$ is measured intermittently;
  c) a value indicative to engine's load $L_e$ is determined more often than the heat value of the fuel $HV_m$ is measured in the step b);
  d) a value indicative to mass flow rate $q_m$ of the fuel fed to the engine is determined more often than the heat value of the fuel $HV_m$ is measured in the step b);
  e) a relative heat value $HV_r$ is determined using a formula

$$HV_r = Le / q_m * \eta$$

where $\eta$ is estimated or determined engine efficiency;

f) a correction factor Q is determined, which correction factor Q is a function of at least the measured heat value of the fuel $HV_m$, and the relative heat value $HV_r$;

g) a control heat value $HV_e$ is determined, which control heat value is a function of at least the correction factor Q defined in step f) and the relative heat value $HV_r$ determined in step e); and

h) at least one control parameter of the engine is determined making use of the control heat value $HV_e$ determined in step g).

2. Method of controlling the operation of an internal combustion piston engine according to claim 1, **characterized in that** the correction factor Q is an offset difference $\Delta = HV_m - HV_r$, and the control heat value is determined by the function $HV_e = HV_r + \Delta$.

3. Method of controlling the operation of an internal combustion piston engine according to claim 1, **characterized in that** the correction factor Q is a ratio d $= HV_m / HV_r$ and the control heat value is determined by the function $HV_e = d * HV_r$.

4. Method according to anyone of the claims 1- 3, **characterized, in that** fuel of several qualities is combined constituting the fuel fed to the engine.

5. Method according to anyone of the claims 1- 3, **characterized, in that** the second interval equals the third interval.

6. Method according to anyone of the claims 1- 3, **characterized, in that** the first interval differs from the second interval.

7. Method according to anyone of the claims 1 - 3, **characterized, in that** the heat value of the fuel $HV_m$ is measured using first interval of 10s - 10min.

8. Method according to anyone of the claims 1 - 3, **characterized, in that** the value indicative to engine's load $L_e$ is determined using a second interval of 10ms - 1s.

9. Method according to claim 1, **characterized, in that** the correction factor Q is subjected to filtering process prior to step g).

10. Method according to claim 3, **characterized, in that** the ratio d is subjected to filtering process prior to step g).

11. Method according to claim 2, **characterized, in that** the offset difference $\Delta$ is subjected to filtering process prior to step g).

12. Method according to claim 1, **characterized, in that** during start-up of the engine the at least one control parameter of the engine is determined making use of the measured heat value $HV_m$ alone.

13. Method according to claim 1, **characterized, in that** the step d) is determined based on position status of a fuel feed control valve of the engine.

14. Control system for controlling the operation of a gas operated internal combustion piston engine, comprising

a) a control module arranged to receive operational data of the engine and send control data to the engine;

b) measurement system arranged to intermittently measure heat value of the fuel $HV_m$ I to be fed to the engine and arranged to communicate with the control module;

c) an engine load determining unit arranged to receive operational data from the engine for providing a value indicative to engine's load $L_e$ more often than the heat value of the fuel $HV_m$ is measured and arranged to communicate with the control module;

d) fuel mass flow rate $q_m$ determination unit of the engine arranged to determine a value indicative to mass flow rate $q_m$ of the fuel fed to the engine more often than the heat value of the fuel $HV_m$ is measured and to communicate with the control module;

e) a processing unit in connection with the control module arranged to produce at least one engine control parameter based on a control heat value $HV_e$, determined by calculation of

- a relative heat value $HV_r$ using a formula

$$HV_r = Le / q_m * \eta$$

wherein $\eta$ is estimated or determined engine efficiency information stored or made available to the processing unit;

- a correction factor Q being is a function of at least the measured heat value of the fuel $HV_m$, and the relative heat value $HV_r$; and

- the value for control heat value $HV_e$ being a function of at least the correction factor Q and the relative heat value $HV_r$, arranged to take place in the processing unit.

**Patentansprüche**

1.  Verfahren zum Steuern des Betriebs einer Hubkolben-Brennkraftmaschine, wobei

    a) gasförmiger Brennstoff der Maschine zugeführt wird, damit er darin verbrannt wird;
    b) der Heizwert des Brennstoffs $HV_m$ intermittierend gemessen wird;
    c) ein Wert, der die Belastung $L_e$ der Maschine anzeigt, häufiger bestimmt wird, als der Heizwert des Brennstoffs $HV_m$ in Schritt b) gemessen wird;
    d) ein Wert, der den Massendurchsatz $q_m$ des Brennstoffs anzeigt, der der Maschine zugeführt wird, wird häufiger bestimmt, als der Heizwert des Brennstoffs $HV_m$ in Schritt b) gemessen wird;
    e) ein relativer Heizwert des Brennstoffs $HV_r$ wird unter Verwendung einer Formel bestimmt

    $$HV_r = Le \ / \ q_m \ * \ \eta$$

    wobei $\eta$ der geschätzte oder bestimmte Maschinenwirkungsgrad ist;
    f) ein Korrekturfaktor Q wird bestimmt, wobei der Korrekturfaktor Q eine Funktion zumindest des gemessenen Heizwertes des Brennstoffs $HV_m$ und des relativen Heizwertes $HV_r$ ist;
    g) ein Kontrollheizwert $HV_e$ wird bestimmt, wobei der Kontrollheizwert eine Funktion zumindest des Korrekturfaktors Q, der in Schritt f) bestimmt wird, und des relativen Heizwertes $HV_r$ ist, der in Schritt e) bestimmt wird; und
    h) mindestens ein Kontrollparameter der Maschine wird bestimmt, wobei der Kontrollheizwert $HV_e$ verwendet wird, der in Schritt g) bestimmt wird.

2.  Verfahren zum Steuern des Betriebs einer Hubkolben-Brennkraftmaschine nach Anspruch 1, **dadurch gekennzeichnet, dass** der Korrekturfaktor Q eine Differenz $\Delta = HV_m - HV_r$ ist, und der Kontrollheizwert wird durch die Funktion $HV_e = HV_r + \Delta$ bestimmt.

3.  Verfahren zum Steuern des Betriebs einer Hubkolben-Brennkraftmaschine nach Anspruch 1, **dadurch gekennzeichnet, dass** der Korrekturfaktor Q ein Verhältnis $d = HV_m / HV_r$ ist, und der Kontrollheizwert wird bestimmt durch die Funktion $HV_e = d * HV_r$.

4.  Verfahren nach einem der Ansprüche 1 bis 3, **dadurch gekennzeichnet, dass** Brennstoff verschiedener Qualitäten kombiniert wird, die den Brennstoff darstellen, der der Maschine zugeführt wird.

5.  Verfahren nach einem der Ansprüche 1 bis 3, **dadurch gekennzeichnet, dass** das zweite Intervall gleich dem dritten Intervall ist.

6.  Verfahren nach einem der Ansprüche 1 bis 3, **dadurch gekennzeichnet, dass** das erste Intervall sich vom zweiten Intervall unterscheidet.

7.  Verfahren nach einem der Ansprüche 1 bis 3, **dadurch gekennzeichnet, dass** der Heizwert des Brennstoffs $HV_m$ unter Verwendung des ersten Intervalls von 10 s - 10 min gemessen wird.

8.  Verfahren nach einem der Ansprüche 1 bis 3, **dadurch gekennzeichnet, dass** der Wert, der die Belastung der Maschine $L_e$ anzeigt, unter Verwendung eines zweiten Intervalls von 10 ms - 1 s bestimmt wird.

9.  Verfahren nach Anspruch 1, **dadurch gekennzeichnet, dass** der Korrekturfaktor Q einem Filterprozess vor Schritt g) ausgesetzt wird.

10. Verfahren nach Anspruch 3, **dadurch gekennzeichnet, dass** das Verhältnis d einem Filterprozess vor Schritt g) ausgesetzt wird.

11. Verfahren nach Anspruch 2, **dadurch gekennzeichnet, dass** die Differenz $\Delta$ einem Filterprozess vor Schritt g) ausgesetzt wird.

12. Verfahren nach Anspruch 1, **dadurch gekennzeichnet, dass** während des Anlaufs der Maschine der mindestens eine Kontrollparameter der Maschine unter Verwendung des gemessenen Heizwertes $HV_m$ allein bestimmt wird.

13. Verfahren nach Anspruch 1, **dadurch gekennzeichnet, dass** der Schritt d) auf der Basis des Positionsstatus eines Brennstoffzufuhr-Steuerventils der Maschine bestimmt wird.

14. Steuersystem zum Steuern des Betriebs einer gasbetriebenen Hubkolben-Brennkraftmaschine, umfassend

    a) ein Kontrollmodul, das dafür ausgelegt ist, Betriebsdaten der Maschine zu empfangen und Steuerdaten an die Maschine zu senden;
    b) Messsystem, das dafür ausgelegt ist, intermittierend den Heizwert des Brennstoffs $HV_m$ zu messen, der der Maschine zugeführt werden soll, und mit dem Kommunikationsmodul zu kommunizieren;
    c) eine Maschinenlast-Bestimmungseinheit, die dafür ausgelegt ist, Betriebsdaten von der Maschine zu erhalten, um einen Wert, der die Maschinenlast $L_e$ anzeigt, öfter zu bestimmen, als der Heizwert des Brennstoffs $HV_m$ gemessen wird, und mit dem Kontrollmodul zu kommunizieren;

d) Brennstoff-Massendurchsatz-$q_m$-Bestimmungseinheit der Maschine, die dafür ausgelegt ist, einen Wert, der die Massendurchsatzrate $q_m$ des Brennstoffs anzeigt, der der Maschine zugeführt wird, häufiger zu bestimmen, als der Heizwert des Brennstoffs $HV_m$ gemessen wird, und mit dem Kontrollmodul zu kommunizieren;

e) eine Verarbeitungseinheit in Verbindung mit dem Kontrollmodul, die dafür ausgelegt ist, mindestens einen Maschinenkontrollparameter zu erzeugen, der auf einem Kontrollheizwert $HV_e$ beruht, der durch Berechnung

- eines relativen Heizwertes $HV_r$ bestimmt wird, wobei eine Formel verwendet wird:

$$HV_r = Le / q_m * \eta$$

wobei $\eta$ die geschätzte oder bestimmte Maschinenwirkungsgrad-Information ist, die gespeichert ist oder für die Verarbeitungseinheit verfügbar gemacht ist;

- wobei ein Korrekturfaktor Q eine Funktion aus mindestens dem gemessenen Heizwert des Brennstoffs $HV_m$, und dem relativen Heizwert $HV_r$ ist; und

- wobei der Wert für den Kontrollheizwert $HV_e$ eine Funktion zumindest des Korrekturfaktors Q und des relativen Heizwertes $HV_r$ ist, der dafür ausgelegt ist, in der Verarbeitungseinheit zustande zu kommen.

**Revendications**

1. Procédé de commande du fonctionnement d'un moteur à piston à combustion interne, le procédé

a) du combustible gazeux est alimenté vers le moteur pour être brûlé dans celui-ci ;

b) la valeur calorifique du combustible $HV_m$ est mesurée de manière intermittente ;

c) une valeur indicative de la charge du moteur Le est déterminée plus souvent que la valeur calorifique du combustible $HV_m$ est mesurée lors de l'étape b) ;

d) une valeur indicative du débit massique $q_m$ du combustible alimenté vers le moteur est déterminée plus souvent que la valeur calorifique du combustible $HV_m$ est mesurée lors de l'étape b) ;

e) une valeur calorifique relative $HV_r$ est déterminée en utilisant une formule

$$HV_r = Le / q_m * \eta$$

dans laquelle $\eta$ représente l'efficacité estimée ou déterminée du moteur;

f) un facteur de correction Q est déterminé, le facteur de correction Q est une fonction d'au moins la valeur calorifique mesurée du combustible $HV_m$, et de la valeur calorifique relative $HV_r$ ;

g) une valeur calorifique de commande $HV_e$ est déterminée, la valeur calorifique de commande est une fonction de moins du facteur de correction Q défini lors de l'étape f) et de la valeur calorifique relative $HV_r$ déterminée lors de l'étape e) ; et

h) au moins un paramètre de commande du moteur est déterminé en faisant usage de la valeur calorifique de commande $HV_e$ déterminée lors de l'étape g).

2. Procédé de commande du fonctionnement d'un moteur à piston à combustion interne selon la revendication 1, **caractérisé en ce que** le facteur de correction Q représente une différence d'écart $\Delta = HV_m - HV_r$, et la valeur calorifique de commande est déterminée par la fonction $HV_e = HV_r + \Delta$.

3. Procédé de commande du fonctionnement d'un moteur à piston à combustion interne selon la revendication 1, **caractérisé en ce que** le facteur de correction Q est un rapport $d = HV_m / HV_r$, et la valeur calorifique de commande est déterminée par la fonction $HV_e = d * HV_r$.

4. Procédé selon l'une quelconque des revendications 1 à 3, **caractérisé en ce que** du combustible possédant plusieurs qualités est combiné constituant le combustible alimenté vers le moteur.

5. Procédé selon l'une quelconque des revendications 1 à 3, **caractérisé en ce que** le second intervalle est égal au troisième intervalle.

6. Procédé selon l'une quelconque des revendications 1 à 3, **caractérisé en ce que** le premier intervalle est différent du second intervalle.

7. Procédé selon l'une quelconque des revendications 1 à 3, **caractérisé en ce que** la valeur calorifique du combustible $HV_m$ est mesurée en utilisant un premier intervalle compris entre 10 s et 10 min.

8. Procédé selon l'une quelconque des revendications 1 à 3, **caractérisé en ce que** la valeur indicative de la charge du moteur $L_e$ est déterminée en utilisant un second intervalle compris entre 10 ms et 1 s.

9. Procédé selon la revendication 1, **caractérisé en ce que** le facteur de correction Q est sujet à un processus de filtration avant l'étape g).

10. Procédé selon la revendication 3, **caractérisé en ce que** le rapport d est sujet à un processus de filtration avant l'étape g).

11. Procédé selon la revendication 2, **caractérisé en ce que** la différence d'écart $\Delta$ est sujette à un processus de filtration avant l'étape g).

12. Procédé selon la revendication 1, **caractérisé en ce que** pendant la mise en marche du moteur l'au moins un paramètre de commande du moteur est déterminé en faisant seulement usage de la valeur calorifique mesurée $HV_m$.

13. Procédé selon la revendication 1, **caractérisé en ce que** l'étape d) est déterminée sur la base de l'état de position d'une soupape de commande à alimentation en combustible du moteur.

14. Système de commande destiné à la commande du fonctionnement d'un moteur à piston à combustion interne fonctionnant au gaz, comprenant

   a) un module de commande agencé pour recevoir des données opérationnelles provenant du moteur et pour envoyer des données de commande vers le moteur ;
   b) un système de mesure agencée pour mesurer de manière intermittente la valeur calorifique du combustible $HV_m$ à alimenter vers le moteur et agencé pour communiquer avec le module de commande ;
   c) une unité déterminant la charge du moteur agencée pour recevoir des données opérationnelles depuis le moteur pour fournir une valeur indicative de la charge du moteur $L_e$ plus souvent que la valeur calorifique du combustible $HV_m$ est mesurée et agencée pour communiquer avec le module de commande ;
   d) une unité de détermination du débit massique de combustible $q_m$ agencée pour déterminer une valeur indicative débit massique $q_m$ du combustible alimenté vers le moteur plus souvent que la valeur calorifique du combustible $HV_m$ est mesurée et pour communiquer avec le module de commande ;
   e) une unité de traitement en relation avec le module de commande agencée pour produire au moins un paramètre de commande du moteur sur la base d'une valeur calorifique de com-

mande $HV_e$ déterminée par le calcul

   - d'une valeur calorifique relative $HV_r$ en utilisant une formule

$$HV_r = L_e \; / \; q_m \; * \; \eta$$

dans laquelle $\eta$ représente l'information sur l'efficacité estimée ou déterminée du moteur stockée ou mise à disposition de l'unité de traitement ;
   - un facteur de correction Q étant une fonction d'au moins la valeur calorifique mesurée du combustible $HV_m$ et de la valeur calorifique relative $HV_r$ ; et
   - la valeur pour la valeur calorifique de commande étant une fonction d'au moins le facteur de correction Q et de la valeur calorifique relative $HV_r$ agencée pour prendre place dans l'unité de traitement.

Fig. 1

**EP 2 880 287 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1586758 A2
- US 2005177300 A1